# EUROPEAN PATENT APPLICATION

(11) **EP 2 169 611 A1**
(43) Date of publication of application: **31.03.2010**
(21) Application number: 08016692.9
(22) Date of filing: 23.09.2008
(51) Int. Cl.: G06Q 50/00

(54) **SQC engine with customizable rules**

(71) Applicant: Siemens Aktiengesellschaft, 80333 München (DE)
(72) Inventor: Depreter, Frédéric, 7070 Le Roeulx (BE)
(74) Representative: Fischer, Michael

(57) **Abstract**

Method for customizing SQC rules (R1, R2) of a system (S) that is used for managing results (RES) of measurements from a production process (PP) or lab analysis (A), comprising the steps of:
providing an external library (L) that is accessible by an SQC engine (E), whereas the external library (L) comprises western electric rules (R1);
customizing the external library (L) by implementing at least one other rule (R2) that is accessible by the SQC engine (E).

## Description

The present invention relates to a method and a system for customizing Statistical Quality Control (SQC) rules according to the independent claims.

The software "SIMATIC IT UNTLAB" manages results of analysis or measures from laboratories or production lines. The software uses SQC rules to control the quality of a product during the production process or analysis or after the production process or analysis.

There is a recurring request for providing some software in to evaluate SQC rules when analysis results are entered and trigger the necessary actions when an abnormal situation is detected. Also, the regulations in the industrial world require to perform SQC in factories and laboratories.

The Western Electric Rules are mostly used as a reference. http://en.wikipedia.org/wiki/Western Electric rules describes examples of western electric rules.

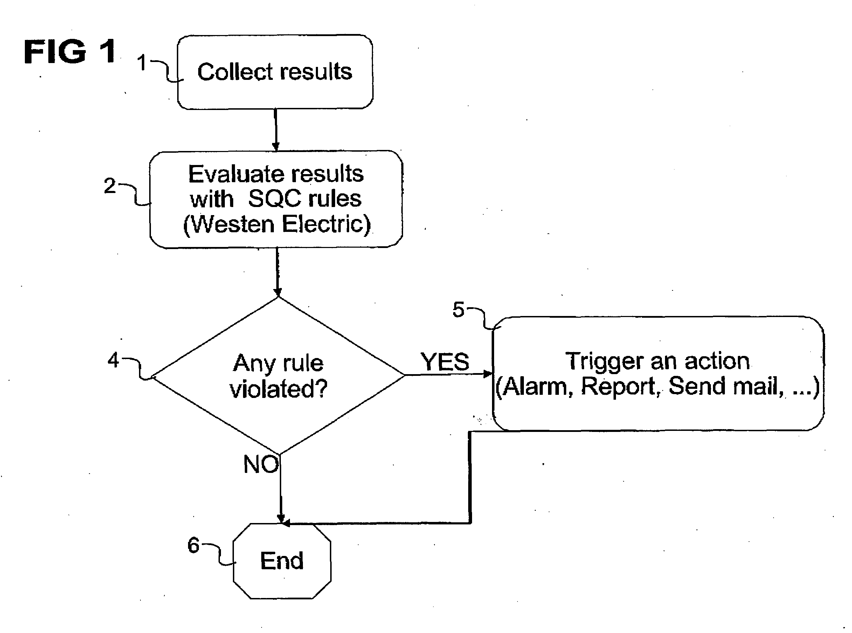

Figure 1 shows a flow diagram of steps performed during an evaluation of a rule according to the state of the art: First, measurements (results) are collected. Then the measurements are evaluated with western electric SQC rules. A measurement can for example be the amount of a component in a pre-product or in a finished product, such as the content of fat in milk that is used for producing cheese. In case a rule is violated, an action is triggered. An action can be for example an alarm, a report or the sending of mail, indicating that there might be some problem in the production process or analysed good. In case no rule is violated, the flow diagram is ended normally.

Western-electric rules are a good start point but generally it is desired to add own rules or adapt existing rules depending on the specific requirements of the production process or lab analysis. However, the rules are implemented as hard-coded rules and it is not possible to take some context into account in those rules, e.g. product produced, production line, recipe used.

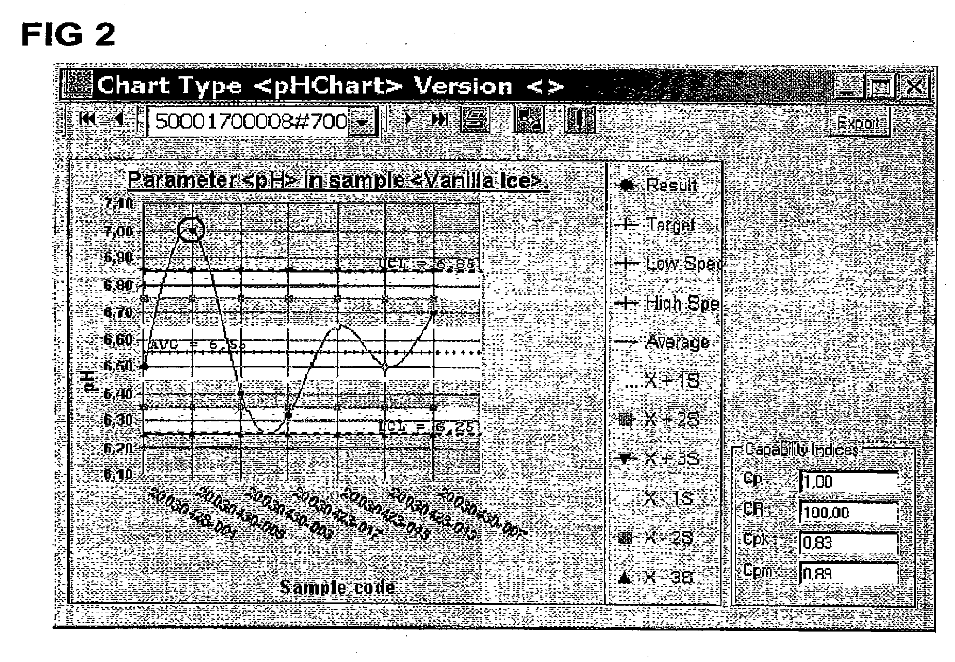

Nevertheless, it is desirable to have an engine that allows flexible rules. For example, based on its experience, a producer of goods might want to introduce different rules in function of more contextual information: e.g. the product produced, the production line, the recipe used. The disadvantage of nowadays methods and systems is that the SQC programs on the market are too much focussed on the visualisation part instead of the rule part, as depicted in Figure 2, which shows a typical SQC card displaying graphically the result of the western electric SQC rules evaluation on a series of result/measurement points.

It is therefore an objective of the present invention to enable easy customizing of rules. This objective is achieved by the measures taken according to the independent claims.

Thereby SQC rules of a system that is used for managing results of measurements from a production process or lab analysis are customized. This is done by providing an external library that is accessible by an SQC engine. The external library comprises western electric rules. The external library is customized by implementing at least one other rule that is accessible by the SQC engine.

External library means that the library is not comprised by the SQC engine.

According to a preferred embodiment, additional contextual information is provided to the external library. The contextual information assigns the at least one other rule to a product. This way rules can be provided in order to evaluate measurements for different products.

The contextual information can for example be used in order to pass information, such as "production line". The SQC rules can then vary in function of the production line (e.g. one new production line might have a more stable process than an old one). Another example is the providing of contextual information, such as "building temperature", when the SQC rules preferably vary in function of the building temperature in order to monitor the quality of margarine when the temperature of the building is going above a certain temperature (e.g. the 28 degrees).

Contextual information can in another example also be used to provide information about a production shift. In this example the sqc rules might vary in function of the production shift feeding or assisting the production line. For example a production engineer might want to monitor only the production quality during the night when he is not present. He will then change the rule in function of the shift.

According to another preferred embodiment, a result is saved thorough a function (SaveResult) which calls up another function (EvalSQCRules). The other function (EvalSQCRules) implements the evaluation of at least one other rules. The advantage of this embodiment is that the function evaluating the rules is isolated from the function adding the measurement to the SQC card. This forces the user that wants to customize these rules to modify the rules without thinking about graphical elements that will be used to display the violation/non-violation of the rule.

According to another preferred embodiment the function (SaveResult) is encrypted and/or can not be modified. An advantage of this embodiment is that the function that is responsible for adding the point to the SQC card is isolated from the function evaluating the SQL rule. This strict separation is allowing to encrypt the code of the function (SaveResult) adding the point to the SQC card (where we do not want the user to interfere with) and to leave the function evaluating the SQC rules not encrypted.

According to another preferred embodiment the other function (EvalSQCRules) is not encrypted and or can be adapted for any project. The advantage of this embodiment is that the default behaviour is clear to the person that has to adapt the other function since it follows the western electric rules.

According to another preferred embodiment the function is implemented at Oracle database level in PL/SQL (the programming language in Oracle).

According to another preferred embodiment, an SQC engine which receives contextual information near the result to be able to customize those rules in function of the result context.

The invention is in the following described on the basis of the figures:
- Figure 1: shows a flow diagram of steps performed during an evaluation of a rule according to the state of the art;
- Figure 2: shows a typical SQC card displaying graphically the result of the western electric SQC rules evaluation on a series of result/measurement points according to the state of the art;
- Figure 3: shows a flow diagram of the SQC data flow according to a first embodiment of the invention;
- Figure 4: illustrates another embodiment of the invention.

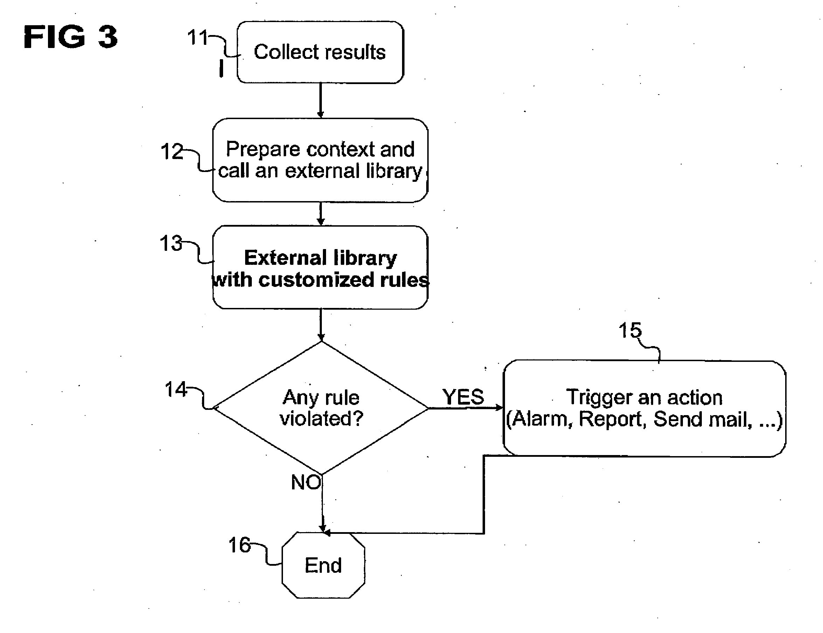

Figure 3 shows a flow diagram of an SQC data flow according to a preferred embodiment of the invention. In a first step 11 measurements (results) are collected. In a second step 12 contextual information is prepared and an external library is called up. The external library comprises customized rules, at least one of which is called up in a third step 13. In a fourth step 14 the at least one customized rule is evaluated. In case one of the evaluated rules is violated (YES), an appropriate measure is taken 15, such as for example the triggering of an action (alarm, report, sending of a mail). In case no rule is violated (NO), no action needs to be taken and the evaluation procedure can be terminated 16 regularly and production or analysis can be proceeded.

Then the measurements are evaluated with western electric SQC rules. A measurement can for example be the amount of a component in a pre-product or in a finished product, such as the content of fat in milk that is used for producing cheese. In case a rule is violated, an action is triggered. An action can be for example an alarm, a report or the sending of mail, indicating that there might be some problem in the production process or analysed good. In case no rule is violated, the flow diagram is ended normally.

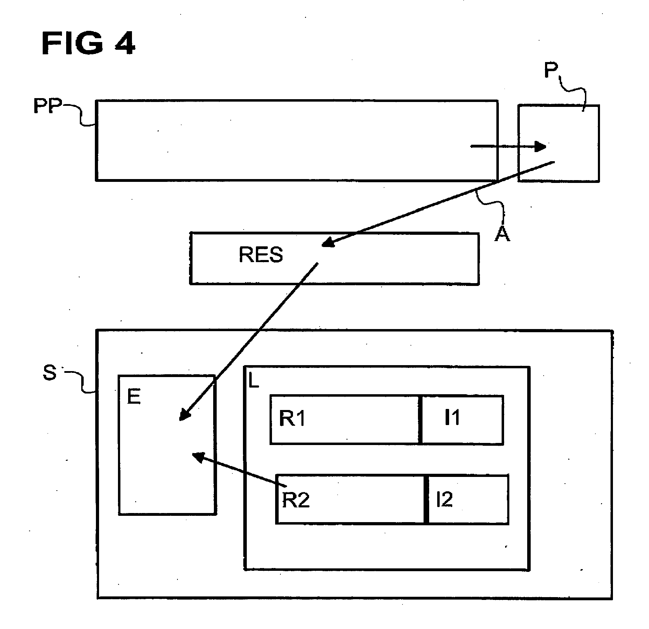

Figure 4 illustrates the invention according to another preferred embodiment. Thereby a product P is produced by a production process PP. The product P is analysed and the results RES of the analysis (A) are provided to an SQC engine E of an inventive system S. The system S further comprises a external library L that is external to the SQC engine E. The library comprises a first rule R1 that is a western electric rule, together with contextual information indicating in what situation the rule R1 is to be applied. Another rule R2 which is not a western electric rule is provided to external library L. Contextual information is assigned to the second rule R2 within the external library L in order to indicate in what situations the rule R2 is to be applied for which results RES.

## Claims

1. Method for customizing SQC rules (R1, R2) of a system (S) that is used for managing results (RES) of measurements from a production process (PP) or lab analysis (A), comprising the steps of:
providing an external library (L) that is accessible by an SQC engine (E), whereas the external library (L) comprises western electric rules (R1);
customizing the external library (L) by implementing at least one other rule (R2) that is accessible by the SQC engine (E).

2. Method according to claims 1, whereas
additional contextual information (I2) is provided to the external library, said contextual information (I2) assigning the at least one other rule (R2) to a product (P).

3. Method according to any one of the preceding claims,
whereas a result (RES) is saved thorough a function (SaveResult) which calls up another function (EvalSQCRules) that is implementing the evaluation of at least one other rule (R2).

4. Method according to claim 3, whereas the function (SaveResult) is encrypted.

5. Method according to claim 3 or 4, whereas the other function (EvalSQCRules) is not encrypted.

6. System comprising means for performing each of the method steps of any one of the preceding claims.
